# EUROPEAN PATENT APPLICATION

(11) **EP 4 253 968 A1**
(43) Date of publication of application: **04.10.2023**
(21) Application number: 22382306.3
(22) Date of filing: 30.03.2022
(51) Int. Cl.: G01P 3/48, G01P 3/481

(54) **MONITORING DEVICE FOR A ROTATING ELEMENT**

(71) Applicant: Fundación Tecnalia Research & Innovation, 48160 Derio - Bizkaia (ES)
(72) Inventor: Muñoz Navascues, Oscar, Derio - Bizkaia (ES); Latapia Llinas, Jaime Luis, Derio - Bizkaia (ES); Lazcanotegui Larrarte, Iñigo, Derio - Bizkaia (ES); Sanchez Catalan, Juan Carlos, 48160 Derio, Bizkaia (ES)
(74) Representative: Balder IP Law, S.L.

(57) **Abstract**

The invention relates to a measuring device (20) to be coupled to an element under supervision (60) capable of rotating about an axis of the element under supervision (60), comprising: a base (24) by which the measuring device (20) can be coupled to the element under supervision (60) by an axle (100) of the measuring device (20), wherein in use of the measuring device (20), when the element under supervision (60) rotates about the axis, the base (24) rotates integrally with it; an electronic system (23) fixed to the base (24), so that when the base (24) rotates, the electronic system (23) rotates integrally with it, wherein the electronic system (23) comprises a triaxial accelerometer (235), a microcontroller (236), wireless communication means (238) and a power supply system (420), the triaxial accelerometer (235) being configured to capture measurements and provide them to the microcontroller (236) which in turn processes and sends them to the wireless communication means (238); a casing (21) configured to remain stationary during rotation of the base (24); and a motor (22) comprising a first portion coupled to the casing (21) and a second portion coupled to the base (24), the motor (22) being configured so that when the base (24) rotates driven by the rotation of the element under supervision (60), the second portion of the motor (22) rotates integrally with it, the motor (22) being connected to the electronic system (23) and the motor (22) acting as a power generator that provides power to the power supply system (420), which in turn powers the microcontroller (236), the triaxial accelerometer (235) and the wireless communication means (238).

## Description

### TECHNICAL FIELD

The present invention belongs to the field of sensor-based monitoring systems for capturing different parameters, such as angular velocity, triaxial acceleration and/or temperature. More specifically, the invention relates to monitoring systems for supervising devices or systems capable of rotating about an axis.

### STATE OF THE ART

In industrial processes in which a device or system rotates about an axis, it is desirable to monitor the conditions of said rotation, since relevant information about the process can be derived from these conditions. For example, based on the rotating system in question and its application, it may be useful to monitor the angular velocity, triaxial acceleration and/or temperature of the rotating device, to supervise the status and/or operation thereof.

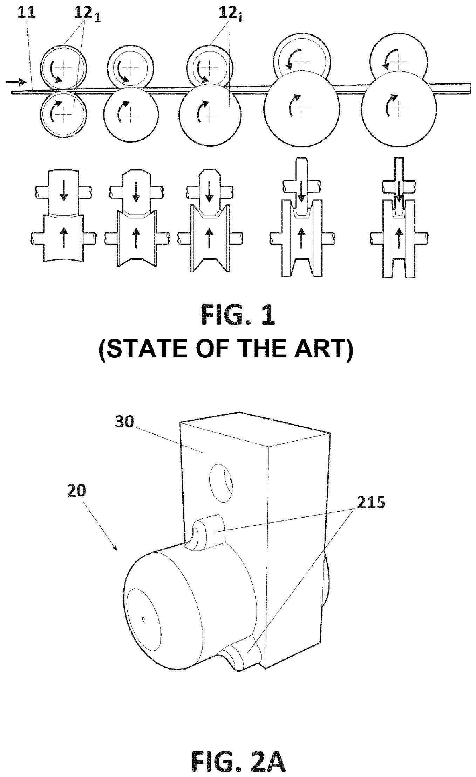

An example of an industrial process that can be monitored and in which rotation about an axis occurs is the rolling or forming process with rollers. For example, the forming process with rollers is a continuous process in which opposing rollers are used to produce long portions of material, with a given thickness and shape, from continuous sheet metal, usually in a coil or rolls, which progressively form as they pass between each pair of rollers. A conventional general diagram of a forming system with rollers is shown in Figure 1. Several pairs of rollers 12₁, ... 12ᵢ are usually required to progressively bend the material 11 into the desired shape and at the same time move it forward through the forming line. The geometry of the upper and lower rollers is such that it allows the material to be given the appropriate shape to obtain the required final shape, thickness and dimensions thereof. Products made by forming with rollers include, for example, canals, gutters, metal side sections (e.g., for houses), ducts, seamless tubes, and various structural sections. Structural profiles, railway tracks and tubes, among others, can also be obtained from this operation.

As can be seen, in this type of process, each pair of opposing rollers 12₁, ... 12ᵢ is not only used as a transport system, but also forms an implicit part of the production process. Any abnormal behaviour, even in an early stage, can affect the quality of the product, meaning that the product may even be discarded. For this reason, supervising components of this type provides advantages both at the maintenance level (for example, changing components when necessary) and at the productive level (product quality control). Specifically, monitoring both the speed of the rollers and their load (associated with the vibration of the component) is desired.

There are measuring devices currently on the market that aim to monitor industrial processes of this type, such as the rolling process with rollers. For example, the company Erbessd Instruments^{®} provides condition monitoring sensors capable of recording vibration and sending it wirelessly to a remote device (https://www.erbessd-instruments.com/condition-monitoring-sensors/?qclid=EAIaIQobChMI7Y E5vHJ9QIVXI1oCR09JQssEAAYASAAEgL7 qfD BwE).

However, conventional monitoring devices have a number of drawbacks. One fundamental drawback of conventional systems is that the acceleration measurement is measured in the structure that supports the rotating component. In other words, they are static measurement systems. This causes inaccuracies in the measurement or requires more complex signal processing to locate the source of the error or a change in the signal normality, which results in incorrect supervision of the process in question. Another disadvantage of conventional systems is that they are only able to capture one type of signal, in other words, they are either accelerometers or tachometers. This means that to obtain the exact speed of the element under supervision (for example, roller) and the vibration signal associated with it, two different devices must be assembled. This makes extensive monitoring of rollers essentially unfeasible, both due to the complexity of the instrumentation and the cost of materials and installation.

### DESCRIPTION OF THE INVENTION

The present invention solves the drawbacks of conventional monitoring methods and systems by means of a measuring device designed to be coupled to an element under supervision capable of rotating about an axis of the element under supervision, such that the measuring device rotates together with the element under supervision. Triaxial acceleration and angular velocity of the element under supervision can be measured in one same measuring device.

In a first aspect of the invention, a measuring device to be coupled to an element under supervision capable of rotating about an axis of the element under supervision is provided. The measuring device comprises: a base by which the measuring device can be coupled to the element under supervision (for example, by a rod of the measuring device), wherein in use of the measuring device, when the element under supervision rotates about the axis, the base rotates integrally with it; an electronic system fixed to the base, so that when the base rotates, the electronic system rotates integrally with it, wherein the electronic system comprises a triaxial accelerometer, a microcontroller, wireless communication means and a power supply system, the triaxial accelerometer being configured to capture measurements and provide them to the microcontroller, which in turn processes and sends them to the wireless communication means; a casing configured to remain stationary during rotation of the base; and a motor comprising a first portion coupled to the casing and a second portion coupled to the base, the motor being configured so that when the base rotates driven by the rotation of the element under supervision, the second portion of the motor rotates integrally with it, the motor being connected to the electronic system and the motor acting as a power generator that provides power to the power supply system, which in turn powers the microcontroller, the triaxial accelerometer and the wireless communication means.

In embodiments of the invention, the measuring device further comprises a supercapacitor configured to store the power coming from the motor and provided by the power supply system.

In embodiments of the invention, the measuring device further comprises a temperature sensor arranged in the electronic system and configured to, in use of the measuring device, take temperature measurements and provide them to the microcontroller and/or to the wireless communication means.

In embodiments of the invention, the measuring device further comprises means for, from a sinusoidal signal of the motor, obtaining a pulse wave proportional to the angular velocity of the motor and delivering said pulse wave to the microcontroller to calculate the angular velocity of the element under supervision.

In embodiments of the invention, the power supply system comprises a rectifier circuit and a boost-buck regulator circuit.

The rectifier circuit can be formed by the arrangement in series of a first rectification stage at the output of a first phase of the motor and a second rectification stage at the output of a second phase of the motor.

The boost-buck regulator circuit can be configured to manage the charge of an output supercapacitor, such that it can perform its function both with an input voltage lower than the maximum charge voltage of the supercapacitor, increasing the output voltage, and with an input voltage higher than the maximum charge voltage of the supercapacitor, decreasing the output voltage.

In embodiments of the invention, the motor is configured to operate at a speed between 20 and 1500 rpm.

In embodiments of the invention, the motor is a stepper motor.

In embodiments of the invention, the element under supervision is a roller of a rolling or forming machine.

In a second aspect of the invention, a wireless monitoring system is provided. It comprises a plurality of measuring devices according to the first aspect of the invention, coupled to a respective plurality of elements under supervision. The system is configured so that, in use of the measuring devices, each measuring device sends the acquired, processed and/or calculated data to an access point comprising a wireless communications block configured to communicate with the measuring devices.

In embodiments of the invention, the access point is configured to acquire the information coming from the measuring devices and store it in a database.

Compared to conventional measuring systems in which the acceleration measurement is measured in the structure that supports the component, the device of the invention allows the acceleration to be measured on the rotating axis itself. In other words, the accelerometer rotates together with the axis of the element under supervision. This fact makes it possible to measure more accurately possible changes in speed on the axis and, therefore, in the device that rotates about the axis (for example, a roller or a plurality of rollers).

The measuring device reads angular velocity in addition to acceleration. Conventional sensors do not enable integrated reading of speed and acceleration on the same device. In general, it is necessary to place two sensors to take these two readings. Therefore, the device of the invention significantly reduces the number of measuring devices necessary for complete supervision of an industrial process.

The self-powering capacity of the device of the invention, which does not require batteries and therefore does not require maintenance work associated with changing the battery, is also worth noting.

These and other advantages of the invention will become apparent from the detailed description that follows and will be pointed out in particular in the attached claims.

### BRIEF DESCRIPTION OF THE DRAWINGS

As a complement to the description and to help make the features of the invention more readily understandable, according to a practical exemplary embodiment thereof, said description is accompanied by a set of figures constituting an integral part thereof, which by way of illustration and not limitation represent the following:
Figure 1 shows a conventional diagram of a forming system with rollers.

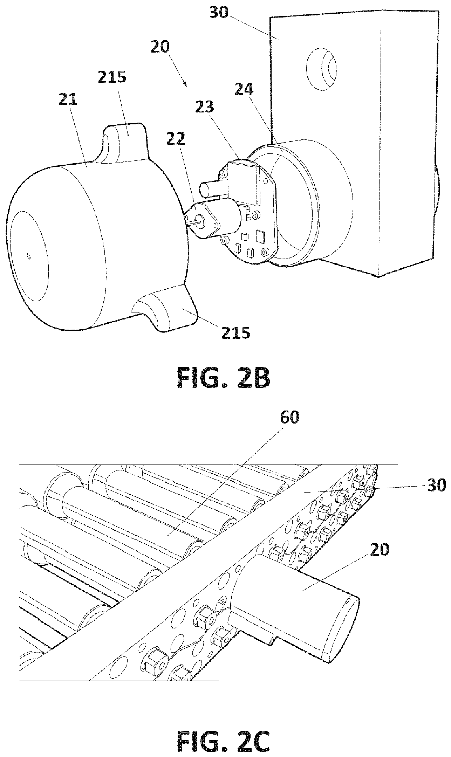

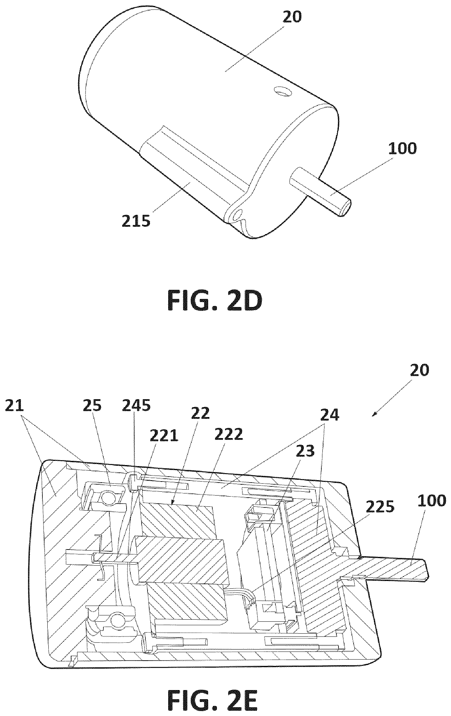

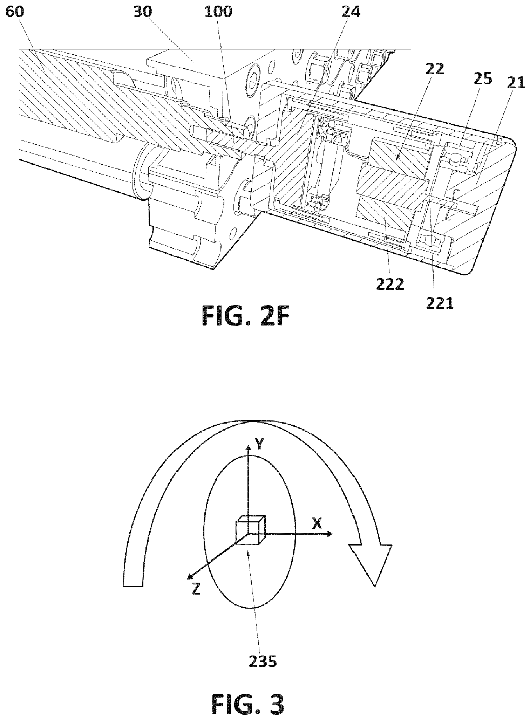

Figure 2A shows a measuring device according to a possible embodiment of the invention. Figure 2B shows an exploded view of the measuring device of Figure 2A, to schematically show the inner elements thereof. Figure 2C shows a measuring device according to the invention, coupled to the shaft about which a roller of a rolling mill made up of pairs of rollers arranged one after the other rotates. Figure 2D shows a view of the measuring device 20, including the shaft (axle) designed to be inserted through the hole in the support shown in Figure 2C. Figure 2E shows a longitudinal cross-section of the measuring device according to an embodiment of the invention. Figure 2F shows a longitudinal cross-section of the measuring device according to an embodiment of the invention, coupled to the longitudinal shaft of a roller.
Figure 3 shows an example of a triaxial accelerometer that can be incorporated into the measuring device of the invention.
Figure 4 shows a possible power supply block and a possible block for obtaining angular velocity from a motor, of the electronic system of the measuring device of the invention.
Figure 5 shows the operation of the measuring device according to an embodiment of the invention.
Figure 6 schematically shows a wireless monitoring system made up of an assembly of measuring devices, each one coupled to an element under supervision.

### DESCRIPTION OF AN EMBODIMENT OF THE INVENTION

The following description is not to be understood as limiting, but is provided for the purpose of describing the broad principles of the invention. The following embodiments are described by way of example, with reference to the aforementioned figures, and show apparatuses, systems and results according to the invention.

The monitoring device and system according to an embodiment of the invention, applied to the supervision of a roller-based rolling/forming mill in the following embodiment, are described in detail below. A person skilled in the art will understand that the monitoring device and system are applicable to other industrial systems in which a rotation movement on an axis occurs.

Figure 2A shows a sensor or measuring device 20 configured to be coupled to a rotating system, for example, to a rotating axis about which the element to be supervised rotates. In Figure 2A, the measuring device 20 is shown together with a support 30 of the element under supervision (element able to rotate). For example, the measuring device 20 can be coupled to the shaft about which a roller of a rolling mill made up of pairs of rollers arranged one after the other rotates. This is schematically shown in Figure 2C, wherein the measuring device 20 has been drawn next to the support 30, coupled to the shaft of the roller 60. Figure 2D shows the measuring device 20, wherein a rod 100 thereof is shown designed to be inserted through a hole in the support 30 shown in Figure 2C (wherein the rod 100 of the device 20 is not shown to allow the hole in the support 30 to be seen). The rod 100 will be coupled to the shaft of the roller 60 by means of a threaded joint, for example. Alternatively, the device 20 is coupled to the roller 60 by any conventional mechanical coupling means.

In general, one device 20 may be used for each roller 60 of the rolling mill. Figure 2B shows an exploded view of the measuring device 20. Figure 2E shows a cross-section of the device 20 and the rod 100 thereof. The device 20 is made up of a base 24 designed to be coupled to the roller 60, for example, by means of a threaded joint. Alternatively, the base 24 may be coupled to the roller 60 by other conventional fixing means. The base 24 is movable (rotary), in other words, it is configured to rotate as the shaft of the element under supervision (for example, roller 60) rotates, shaft to which the measuring device 20 is coupled (by the rod 100 in the implementation shown). The electronic system 23 of the device 20 is arranged inside the base 24 (for example, anchored, attached or firmly coupled). The electronic system 23 is made up of one or more printed circuit boards that include(s) the electronics necessary to capture measurements and send them to a remote monitoring system, and to power the assembly. The fact that there are one or more printed circuit boards depends on the design of the device 20 and the size thereof (on which the space remaining therein for the electronics system depends). The electronic system 23 is described below, among other elements of the device 20.

The device 20 also comprises a generator (also called a microgenerator) implemented by a motor (usually a micromotor) 22. The motor 22 is an electric motor. For example, it can be an AC motor, such as a stepper motor. The motor 22 provides the energy to power the assembly, which in turn obtains it from the rotary movement of the element under supervision (e.g., roller 60). The motor 22 also provides the rotational speed of the element under supervision. To do this, the motor 22 is connected to the electronic system 23 to send it the rotational speed data and the energy to power it. Figure 2E shows possible wiring 225 through which the motor 22 communicates with the electronic system 23.

Finally, the device 20 has a casing 21 which has a protective and insulating purpose, among others. The casing 21 is, for example, made of a plastic material. The casing 21 is configured to remain stationary during the use of the measuring device 20. In other words, the casing 21 is the fixed portion of the measuring device 20. The casing 21 is fixed or anchored, for example, to the support structure 30 that supports the element under supervision. To do so, the casing 21 can incorporate one or more anti-rotation elements, such as one or more mechanical stops that prevent the casing 21 from moving when the device 20 is in operation. The casing 21 can be screwed to the support 30, or fixed to the same in any other way, for example, by means of magnets. The device 20 of Figure 2B shows an example of anti-rotation elements 215, represented by fins that allow the device 20 (the casing 21 thereof) to rest on the structure 30, preventing it from moving. The anti-rotation elements may be, alternatively, magnetic means or other mechanical means, such as screws, other retention means, or a combination of fixing elements (for example, screws) and supporting elements.

A bearing 25 arranged between the mobile base 24 and the fixed portion (casing) 21 allows the base 24 to move with respect to the casing 21. As shown in Figure 2E, the motor 22 has a fixed portion (axle or rod) 221 firmly anchored to the casing 21, and a mobile portion 222 that moves integrally with the base 24. The mobile portion 222 of the motor 22 is fixed to the base 24 by fixing means 245, such as fixing screws. When the measuring device 20 is coupled by the axle 100 thereof to the shaft of the element under supervision (e.g., roller 60), the driving of the element under supervision and its rotation about the longitudinal axis (Z axis) thereof causes the mobile base 24 of the device 20 to move (rotate), moving (rotating) the electronic system 23 and the portion 222 of the motor 22 with it.

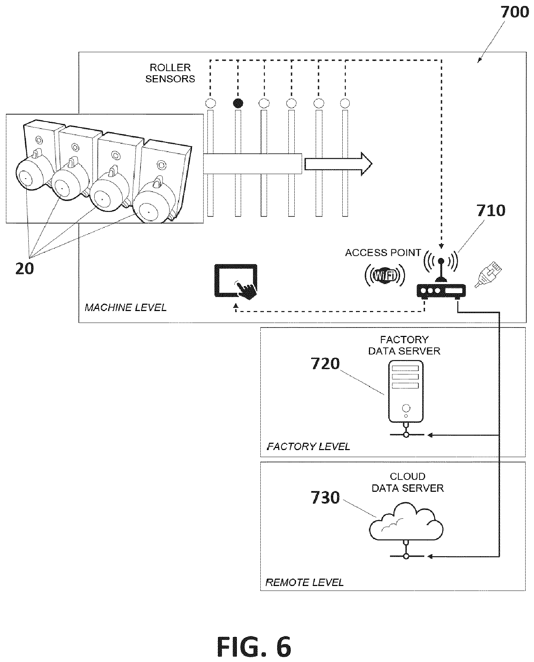

During this movement, the measuring device 20 acquires readings of different parameters in the electronic system 23, parameters such as angular velocity, triaxial acceleration and optionally other parameters, such as temperature of the element under supervision (e.g., roller 60) to which it is coupled. This is explained later. An assembly of measuring devices 20, each coupled, for example, to a respective roller, form a wireless monitoring system, schematically shown by way of example in Figure 6. The system aims, for example, to supervise the operation of material forming/rolling rollers in production lines, wherein these rolling elements (rollers) are a critical part of the process. The system is therefore designed to supervise a complete rolling/forming mill based on rotating elements (for example, rollers), in which a plurality of measuring devices 20 (sensors) can be distributed along the chain, allowing several elements of the process to be monitored.

The operating principle of the measuring device 20 is based on the capture, processing and subsequent wireless retransmission of the information under operating conditions, i.e., once the mechanical assembly (roller with the bearings thereof) is in the rolling cycle. Thanks to the capacity to be self-powered by the very rotation of the roller, explained below, the device 20 can operate without batteries. In addition, given that the triaxial accelerometer rotates integrally with the very axis of the element under supervision (e.g., roller 60), the measurements obtained are highly accurate.

The measuring device 20 therefore has a rotating portion and a fixed portion. The rotating portion (base 24, electronic board 23 and mobile portion of the motor 22) of the device 20 is fixed to the rotating shaft of the element under supervision (the roller 60 in this implementation) by a mechanical connection, for example, based on a threaded joint. The fixed portion of the device 20 is fixed, for example, to the structure that supports the element under supervision, by means of anti-rotation means 215, for example, by means of a retaining element. Therefore, since the instrumentation (the sensors and measuring instruments, including the mobile portion of the motor 22 that enables the angular velocity of the element under supervision to be obtained) is in the rotating portion of the device 20, the operating parameters of the element under supervision (in this case, of the roller) are obtained with greater efficiency with respect to a conventional measuring device, in which the measuring instruments are statically placed next to the roller, since the device 20 of the invention directly receives the signal from the roller and this allows the measuring point to be perfectly referenced. In other words, the measuring device 20 measures the acceleration of the shaft on which the device 20 is coupled (therefore, the acceleration of the roller) on the rotating axis itself, since the accelerometer (included on the electronic board 23) rotates together with the shaft to which the device 20 is coupled. Moreover, the measuring device 20 measures the rotational speed (angular velocity) of the element under supervision through the motor 22 itself.

The electronic system (plate 23 with the electronics thereof) of the device 20 is made up of several elements or blocks. One of them is a measuring block itself. This measuring block includes a triaxial accelerometric sensor (also called a triaxial accelerometer) schematically shown in Figure 3 (triaxial accelerometer 235). Optionally, it can also include a temperature sensor and/or other sensors that may be necessary depending on the application. Figure 3 schematically illustrates the operation of the triaxial accelerometer 235 integrated in the electronic board or boards 23 (electronic system). As explained, the electronic system 23 of the measuring device 20 is located on the rotating portion of the device 20, such that the triaxial accelerometer 235 rotates when the roller 60 (in general, the element under supervision) is rotating. In this way, the device 20 is affected both by the very vibrations of the element under supervision and by the force of gravity. The triaxial accelerometer 235 can measure various parameters.

On the one hand, the triaxial accelerometer 235 measures a first parameter (called for example UNB parameter) associated with the misalignment of the element under supervision (e.g., roller). To calculate the first parameter (associated with the misalignment of the element), only the longitudinal axis (rotating axis of the roller, for example, Z axis) of the reading of the accelerometer 235 is taken into account. This axis coincides with the rotating axis of the element under supervision (e.g., roller) and ideally, in the case of a balanced system, the variation in the different readings of said axis will be constant over time. Three indicators can be calculated based on this measurement: (1) RMS, (Root Mean Square). It is the RMS factor of the signal, proportional to the installation angle of the element under supervision according to the plane of gravity. (2) STD, (Standard Deviation). The standard deviation is aimed at observing the degree of unbalance of the axis. (3) Crest Factor. The crest factor is (Max/RMS). Aimed at detecting fast events. Acceleration peaks caused by sudden changes.

The triaxial accelerometer 235 enables a second parameter (called for example ACC parameter) associated with the vibrations of the element under supervision (e.g., roller) to be obtained. To calculate the second parameter (associated with vibrations of the element), both the X and Y axes must be taken into account (i.e., the two axial axes, which are the axes different from the longitudinal axis about which the element under supervision rotates). The readings on these two X and Y axes are integrated into one single variable ACC, sum of the absolute values of the measurements on each axis: abs(AccX), abs(AccY), by which variable ACC the same indicators are extracted as in the foregoing case (ACC=abs(AccX)+abs(AccY)):
- ACC_RMS=RMS(ACC)
- ACC_STD=STD(ACC)
- ACC_CF=max(ACC)/RMS(Acc)

The obtained indicators are: (1) RMS, (Root Mean Square). RMS factor of the ACC parameter or variable. (2) STD, (Standard Deviation). Standard deviation, aimed at observing the vibration rate of the bearing. (3) Crest Factor. Crest factor, (Max/RMS). Aimed at detecting fast events. Acceleration peaks caused by sudden changes, material imperfections, bearing failure, etc.

In embodiments of the invention, the extracted indicators are preferably processed differentially (preferably in a remote destination device), taking into account both the material that is introduced into the system and the speed of the process. The system is capable of storing the raw signal of each measuring device 20 in order to retransmit said signals for an in-depth analysis of the failure topology. It is possible to implement other types of algorithms to extract features that are complementary to the existing ones.

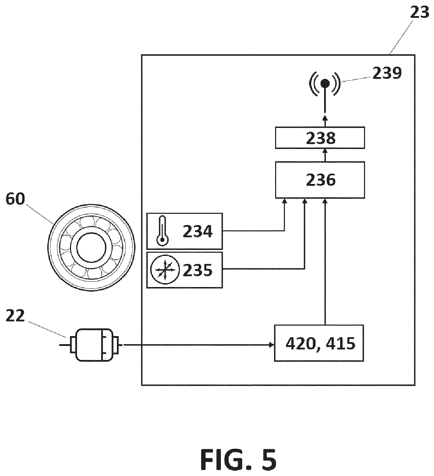

The electronic system (board 23 with the electronics thereof) of the device 20 also has a microcontroller block. This block includes a low-power microcontroller (236 in Figure 5). Acceleration and angular velocity are calculated in the microcontroller 236. It is also responsible for sending the results to the communication means for wireless delivery to other equipment, for example, for further processing.

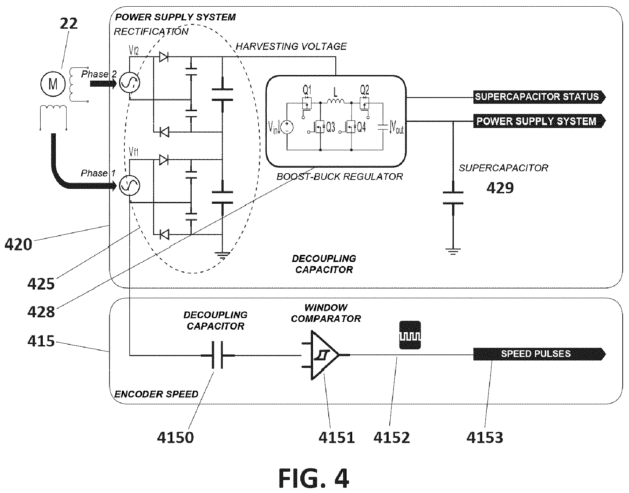

The electronic system (board 23 with the electronics thereof) of the device 20 also has a power supply block 420 which, together with the motor 22 (preferably a stepper motor, such as a stepper micromotor), provides the necessary power supply (voltage) for the system (microcontroller 236, communications system 238 and sensors 234, 235) to work. It is important to note that the elements of the system remain in a low-power state until their intervention is required. For example, an accelerometer 235 is in low-power mode until it has to take measurements, or the communications module 238 is in low-power mode until it needs to be activated to send data. In addition, the motor 22 itself acts as an encoder (angular velocity sensor), such that it provides the rotational speed of the element under supervision (e.g., roller). Figure 4 shows the motor 22 and the power supply circuit 420 and encoder circuit (for obtaining speed) 415. The motor, such as a stepper motor 22, has two phases that provide two respective voltages.

The power supply block 420 (implemented in the electronic system 23) is on standby when the element to be supervised (for example, roller) is static, and supplies power to the system when the element to be supervised (e.g., roller) is moving, preferably in a rotational range that depends on the application. The rotational range of the motor 22 can vary, for example, from 20 to 1500 rpm, such as from 20 to 1200 rpm, or from 10 to 900 rpm, or from 30 to 600 rpm, or from 60 to 600 rpm. When the element to be supervised is moving, the mobile base 24 of the device 20 moves, moving the electronic system 23 and the mobile portion of the motor 22 with it. Then, one of the phases of the moving motor 22 (phase 1 has been chosen in Figure 4, but it could interchangeably be phase 2) provides the microcontroller 236 of the electronic system 23 with a signal whose frequency is proportional to the rotation of the element to be supervised (signal delivered to the circuit 415). Thus, the motor 22 provides the microprocessor 236 with means to obtain the angular velocity of the element to be supervised.

In addition to providing the rotational speed of the element under supervision, the motor 22 is the main generator of the system (i.e., of the device 20), since the motor 22 (specifically, the rotor thereof), once moving and pulled by the mobile base 24, is what provides the sinusoidal signals that will be used for energy extraction (and also for obtaining the angular velocity of the device under supervision) at the output of its phases (phase 1 and phase 2, in Figure 4).

The power supplying stage (harvesting) 420 is implemented by a rectification stage 425 and another boost/buck regulation stage 428. The rectification stage 425 serves to convert the signal from alternating current AC to direct current DC. In the implementation of Figure 4, the rectification stage 425 is implemented by two rectifier circuits in series (one from phase 1 and the other from phase 2). Each one implements a voltage boost circuit (voltage doubler) made up of two diodes and capacitors that allow the existing voltage in the respective winding of the motor 22 to be doubled. In other words, each phase of the motor 22 (phase 1 and phase 2) uses a boost circuit (the two boost circuits are connected in series to each other) to obtain the maximum possible voltage with the smallest energy losses. A certain voltage (harvesting voltage in Figure 4) provided by the motor 22 is thus obtained. After the rectification stage 425, a boost/buck regulation stage 428 is implemented (a commercial integrated circuit can be used) which is responsible for managing the charge of an output supercapacitor 429, such that it can perform its function both with a lower input voltage (increasing the output voltage) and a higher input voltage (decreasing the output voltage) than the maximum charge voltage of the supercapacitor 429. In turn, the integrated circuit 428 provides a digital output that informs the microcontroller 236 whether a supercapacitor 429 is fully charged ("supercapacitor status" in Figure 4) so that, preferably, only when the supercapacitor is fully charged, or at least when the charge thereof exceeds a certain threshold, does the process of acquisition and retransmission of information (acceleration, speed and optionally temperature and/or other parameters) begin. In this text, the term "supercapacitor" is used to refer to a capacitor with a capacitance greater than approximately 1 mF (1 millifarad).

With regard to the second function of the motor 22, in the lower portion of Figure 4, the functionality as encoder 415 of the motor 22 for obtaining the rotational speed (angular velocity) of the motor 22 (generator) is shown. The higher the rotational speed of the rotor of the motor 22 (in turn driven by the rotation of the element under supervision (e.g., roller 60), the higher the frequency of the sinusoidal signal of any of the phases of the motor 22. Thus, from the sinusoidal signal of the motor (obtained from phase 1 in Figure 4, but it can be obtained from phase 2 in a similar way) decoupled by a decoupling capacitor 4150, the decoupled signal is subjected to a window comparator (for example, a Schmitt comparator) 4151 to obtain a digital pulse signal (pulse wave) 4152 proportional to the rotational speed of the motor 22. The pulse wave 4152 is sent 4153 to the microcontroller 236 so that it calculates the speed 4153 of the roller, taking into account the resolution of the motor 22, i.e., the number of steps per revolution. The angular velocity is calculated in the microcontroller 236 from the frequency (pulses per second) of the pulse wave 4152. For example, the angular velocity can be calculated from the frequency of the pulse wave, further applying the constants of the motor 22.

The microcontroller 236 is in charge of managing the capture of the sensors (acceleration and optionally temperature or others), obtaining the acceleration from the accelerometer measurements and obtaining the angular velocity signal from the pulse wave obtained from the motor 22. It is also in charge of processing and sending (retransmitting) the processed information through a communications block (transceiver, which preferably operates in radio frequency RF) (238 in Figure 5) that is part of the electronic system 23. In one possible implementation, the microcontroller 236 processes the readings from the accelerometer 235 by extracting the RMS, standard deviation, and crest factors corresponding to both the rotation-sensitive axes (X and Y axes) and the static axis of the element (Z axis) from the signal, in order to provide indicators of the status of the element under supervision (e.g., roller 60). In another possible implementation, the microcontroller 236 can also acquire and retransmit the raw data from the sensors corresponding to a measuring cycle.

The communications block 238 of the electronic system 23 is used for the wireless transmission and reception (transceiver) of the measurements and any other information that is to be sent in one direction or another. In one possible implementation, the transceiver operates in radio frequency (RF). Alternatively, it could operate according to other wireless communication protocols, such as Bluetooth, Wi-Fi, and others. For example, the communications block 238 sends signals with the measurements to a remote data collector. By way of example, it can work in the ISM band (868 MHz) with a proprietary protocol.

The operation of the measuring device 20, during use thereof, coupled to the rotating shaft of the element under supervision (e.g., roller 60), is schematically shown in Figure 5, wherein the micromotor (or microgenerator) 22, the element under supervision 60 (which represents the rotation of the measuring device 20 since the measuring device 20 is coupled to and rotates integrally with the element 60) and various components of the electronic system 23 (which rotates integrally with the element 60) are shown. It is described considering the particular case in which the element under supervision is a roller. Once the roller 60 starts to rotate, the measuring device 20 starts charging the supercapacitor 429 and when it reaches a certain level, then the electronics start up. The electronics are powered on by the energy provided by the power supply system 420. In other words, the measuring device 20 is powered (or "self-powered") by the rotation of the roller 60, which rotates the rotor of the motor 22, which in turn charges the supercapacitor 429 through the power supply or harvesting circuit 420, such that it operates without batteries or other power supplying means. Once the power supply is stabilised, the angular velocity is read in the encoder circuit 415 and in the microcontroller 236 through the pulses provided by the motor 22 and encoder circuit 415, resulting in the calculation of the RPM of the assembly. Once the angular velocity in the microcontroller 236 has been calculated, the acceleration from the triaxial sensor 235 is read during a time window corresponding to at least one rotation of the roller 60. Alternatively, the acceleration is measured before or during the speed calculation. If the device 20 incorporates a temperature sensor 234, it is read and the measurements thereof are provided to the microcontroller 236. If the device 20 includes other sensors, the readings and measurements thereof are also provided to the microcontroller 236.

As explained above, the measurements of the accelerometer 235 are reflected in two types of output variables depending on their utility. On the one hand, the axis of acceleration corresponding to the longitudinal axis of the roller (Z axis in Figure 3) is associated as an indicator of unbalance of the system, in turn having the following marks as reference KPIs: (a) RMS value. Effective value indicator of acceleration. This value is proportional to the degree of inclination of the element with respect to the force of gravity. (b) STD value or Standard Deviation. This value should ideally be 0. Any increase in this KPI will be indicative of misalignment of the roller. (c) Crest factor. Factor that relates the RMS value to the maximum value. This indicator is aimed at detecting spurious imbalances. On the other hand, the axial accelerations (X and Y axes in Figure 3) are conjugated in order to obtain a single acceleration, which is aimed at measuring roller defects unrelated to unbalance. It has the same KPIs as the previous measure: (a) RMS value. Effective value indicator of acceleration. This value acts more or less proportionally to the load of the roller (which can, among other things, be determined by the type of material, distance of the rollers, etc.). (b) STD value or Standard Deviation. This value should ideally be equivalent to the standard deviation existing in a sine signal with amplitude 1g (because the accelerometer is sensitive to gravity when it rotates). Any substantial increase in this KPI will indicate roughness or imperfections in both the material and the roller. (c) Crest factor. Factor that relates the RMS value to the maximum value. This indicator is aimed at detecting spurious failures. Once the acquisition (for example, in the sensors 234, 235) and calculations (in the microcontroller 236) of the variables are complete, the results are sent wirelessly through the communications block 238 (schematically represented in Figure 6 by a transceiver 238 and an antenna 239). In turn, when this period ends, the measuring cycle starts again.

Figure 6 schematically shows a wireless monitoring system 700 made up of an assembly of measuring devices 20, each one coupled to an element under supervision (element able to rotate), for example, a roller 60. In this way, the monitoring system 700 supervises the operation of rotating elements (for example, material forming/rolling rollers) on one or more production lines. Each of the measuring devices 20 sends the data acquired, processed and/or calculated in the respective microprocessor thereof to an access point 710, such as a gateway or a bridge. The access point 710 has at least one wireless communications block that operates according to the same communications protocol as the measuring devices 20, so that it receives data from the different measuring devices 20. The access point 710 is preferably at the machine or line level. The access point 710, which functions mainly as an information receiver, acquires the information from the sensors 20 and stores it in a common database, which can be accessed from any external system, for example through an industrial communications protocol. This allows the behaviour of the train of rollers 60 obtained by the sensors 20 of the system to be compared with the process parameters controlled by a central unit of the machine. In this way, several elements (e.g., rollers) of the process are monitored simultaneously. The access point 710 may additionally have a certain storage and/or processing capacity. Data from the rollers can be sent via the access point 710 to other elements of the monitoring system, such as a data server 720 (for example, at the factory level) and/or a cloud data server 730 (for example, for remote supervision from a location outside the factory).

It is important to note that since the operating conditions (type of sheet, thickness, material, etc.) are relevant when determining a normal behaviour pattern of the system, it is necessary to associate the measurements acquired by the system 700 with the parameterisation of the machine itself and even with the references of the raw material inserted in the forming machine. To solve this challenge, the measuring devices 20 (and the system 700 as a whole) provide the necessary industrial connectivity for extracting sensor data both to the PLC of the system and to an artificial intelligence system that can analyse the status of the process in depth.

In this text, the word "approximately" should be understood in the sense of indicating values very close to those that accompany the term. In other words, a deviation from an exact value within reasonable limits must be accepted, since a person skilled in the art will understand that such a deviation from the indicated values is unavoidable due to measurement inaccuracies or limitations of the electronics, for example. The same applies to the terms "about" and "substantially".

In this text, the word "comprises" and its variants (such as "comprising", etc.) should not be understood in an exclusive sense, i.e., they do not exclude the possibility of that which is described including other elements, steps, etc.

Moreover, the invention is not limited to the specific embodiments described herein, but rather encompasses, for example, the variations that a person with average skill in the art could carry out (for example, in terms of the choice of materials, dimensions, components, design, etc.), within the scope of what may be deduced from the claims.

## Claims

1. A measuring device (20) to be coupled to an element under supervision (60) capable of rotating about an axis of the element under supervision (60), comprising:
a base (24) by which the measuring device (20) can be coupled to the element under supervision (60), wherein in use of the measuring device (20), when the element under supervision (60) rotates about the axis, the base (24) rotates integrally with it;
an electronic system (23) fixed to the base (24), so that when the base (24) rotates, the electronic system (23) rotates integrally with it, wherein the electronic system (23) comprises a triaxial accelerometer (235), a microcontroller (236), wireless communication means (238) and a power supply system (420), the triaxial accelerometer (235) being configured to capture measurements and provide them to the microcontroller (236) which in turn processes and sends them to the wireless communication means (238);
a casing (21) configured to remain stationary during rotation of the base (24); and
a motor (22) comprising a first portion (221) coupled to the casing (21) and a second portion (222) coupled to the base (24), the motor (22) being configured so that when the base (24) rotates driven by the rotation of the element under supervision (60), the second portion (222) of the motor (22) rotates integrally with it, the motor (22) being connected to the electronic system (23) and the motor (22) acting as a power generator that provides power to the power supply system (420), which in turn powers the microcontroller (236), the triaxial accelerometer (235) and the wireless communication means (238).

2. The measuring device (20) of claim 1, further comprising a supercapacitor (429) configured to store the power coming from the motor (22) and provided by the power supply system (420).

3. The measuring device (20) of any of claims 1-2, further comprising a temperature sensor (234) arranged in the electronic system (23) and configured to, in use of the measuring device (20), take temperature measurements and provide them to the microcontroller (236) and/or to the wireless communication means (238).

4. The measuring device (20) of any of claims 1-3, wherein the electronic system (23) further comprises means (415) for, from a sinusoidal signal of the motor (22), obtaining a pulse wave (4152) proportional to the angular velocity of the motor (22) and delivering (4153) said pulse wave (4152) to the microcontroller (236) to calculate the angular velocity of the element under supervision (60).

5. The measuring device (20) of any of claims 1-4, wherein the power supply system (420) comprises a rectifier circuit (425) and a boost-buck regulator circuit (428).

6. The measuring device (20) of claim 5, wherein the rectifier circuit (425) is formed by the arrangement in series of a first rectification stage at the output of a first phase of the motor (22) and a second rectification stage at the output of a second phase of the motor (22).

7. The measuring device (20) of claim 5, wherein the boost-buck regulator circuit (428) is configured to manage the charge of an output supercapacitor (429), such that it can perform its function both with an input voltage lower than the maximum charge voltage of the supercapacitor (429), increasing the output voltage, and with an input voltage higher than the maximum charge voltage of the supercapacitor (429), decreasing the output voltage.

8. The measuring device (20) of any of claims 1-7, wherein the motor (22) is configured to operate at a speed between 20 and 1500 rpm.

9. The measuring device (20) of any of claims 1-8, wherein the motor (22) is a stepper motor.

10. The measuring device (20) of any of claims 1-9, wherein the element under supervision (60) is a roller of a rolling or forming machine.

11. A wireless monitoring system (700) comprising a plurality of measuring devices (20) according to any of claims 1-10, coupled to a respective plurality of elements under supervision (60), the system (700) being configured so that, in use of the measuring devices (20), each measuring device (20) sends the acquired, processed and/or calculated data to an access point (710) comprising a wireless communications block configured to communicate with the measuring devices (20).

12. The system (700) of claim 11, wherein the access point (710) is configured to acquire the information coming from the measuring devices (20) and store it in a database.
